# EUROPEAN PATENT APPLICATION

(11) **EP 2 351 604 A2**
(43) Date of publication of application: **03.08.2011**
(21) Application number: 10183502.3
(22) Date of filing: 19.04.2007
(51) Int. Cl.: A63F 13/06

(54) **Obtaining input for controlling execution of a game program**

(30) Priority: 04.05.2006 US 381729; 04.05.2006 US 381728; 04.05.2006 US 381725; 04.05.2006 US 381727; 04.05.2006 US 381724; 04.05.2006 US 381721; 06.05.2006 US 382031; 06.05.2006 US 382032; 06.05.2006 US 382033; 06.05.2006 US 382035; 06.05.2006 US 382036; 06.05.2006 US 798031 P; 07.05.2006 US 382041; 06.05.2006 US 382038; 07.05.2006 US 382040; 06.05.2006 US 382034; 06.05.2006 US 382037; 07.05.2006 US 382043; 07.05.2006 US 382039; 04.05.2006 US 418988; 04.05.2006 US 418989; 04.05.2006 US 429047; 04.05.2006 US 429133; 04.05.2006 US 429414; 08.05.2006 US 382250; 08.05.2006 US 430594; 08.05.2006 US 430593; 08.05.2006 US 382259; 08.05.2006 US 382258; 08.05.2006 US 382251; 08.05.2006 US 382252; 08.05.2006 US 382256; 04.05.2006 WO PCT/US2006/017483
(62) Divisional of application: 07251651.1
(71) Applicant: Sony Computer Entertainment America LLC, Foster City, CA 94404 (US)
(72) Inventor: Mao, Xiadong, Foster City, CA 94404 (US); Marks, Richard L., Foster City, CA 94404 (US); Zalewski, Gary M., Foster City, CA 94404 (US)
(74) Representative: Turner, James Arthur

(57) **Abstract**

A method of obtaining input for controlling execution of a game program, comprises receiving controller input information from a user-manipulable game controller, the controller input information including at least one of a) information for identifying a current position of a user-movable control stick of the game controller in relation to a rest position of the control stick, or b) information identifying whether a switch included in the game controller is active; receiving supplementary input information from an environment in which the controller is being used; and obtaining a combined input for controlling the execution of the game program by processing the controller input information and the supplementary input information to yield the combined input.

## Description

### CLAIM OF PRIORITY

This application claims the benefits of U.S. Patent Application No. 11/381,729, to Xiao Dong Mao, entitled ULTRA SMALL MICROPHONE ARRAY, (Attorney Docket SCEA05062US00), filed on May 4, 2006, application number 11/381,728, to Xiao Dong Mao, entitled ECHO AND NOISE CANCELLATION, (Attorney Docket SCEA05064US00), filed on May 4, 2006, U.S. Patent Application No. 11/381,725, to Xiao Dong Mao, entitled "METHODS AND APPARATUS FOR TARGETED SOUND DETECTION", (Attorney Docket SCEA05072US00), filed on May 4, 2006, U.S. Patent Application No. 11/381,727, to Xiao Dong Mao, entitled "NOISE REMOVAL FOR ELECTRONIC DEVICE WITH FAR FIELD MICROPHONE ON CONSOLE", (Attorney Docket SCEA05073US00), filed on May 4, 2006, U.S. Patent Application No. 11/381,724, to Xiao Dong Mao, entitled "METHODS AND APPARATUS FOR TARGETED SOUND DETECTION AND CHARACTERIZATION", (Attorney Docket SCEA05079US00), filed on May 4, 2006, U.S. Patent Application No. 11/381,721, to Xiao Dong Mao, entitled "SELECTIVE SOUND SOURCE LISTENING IN CONJUNCTION WITH COMPUTER INTERACTIVE PROCESSING", (Attorney Docket SCEA04005JUMBOUS), filed on May 4, 2006; all of which are hereby incorporated by reference.

This application claims the benefits of: co-pending application number 11/418,988, to Xiao Dong Mao, entitled "METHODS AND APPARATUSES FOR ADJUSTING A LISTENING AREA FOR CAPTURING SOUNDS", (Attorney Docket SCEA-00300) filed on May 4, 2006; co-pending application number 11/418,989, to Xiao Dong Mao, entitled "METHODS AND APPARATUSES FOR CAPTURING AN AUDIO SIGNAL BASED ON VISUAL IMAGE", (Attorney Docket SCEA-00400), filed on May 4, 2006; co-pending application number 11/429,047, to Xiao Dong Mao, entitled "METHODS AND APPARATUSES FOR CAPTURING AN AUDIO SIGNAL BASED ON A LOCATION OF THE SIGNAL", (Attorney Docket SCEA-00500), filed on May 4, 2006; co-pending application number 11/429,133, to Richard Marks et al., entitled "SELECTIVE SOUND SOURCE LISTENING IN CONJUNCTION WITH COMPUTER INTERACTIVE PROCESSING", (Attorney Docket SCEA04005US01-SONYP045), filed on May 4,2006; and co-pending application number 11/429,414, to Richard Marks et al., entitled "Computer Image and Audio Processing of Intensity and Input Devices for Interfacing With A Computer Program", (Attorney Docket SONYP052), filed on May 4, 2006, all of the entire disclosures of which are incorporated herein by reference.

This application also claims the benefits of U.S. Patent Application No. 11/382,031, entitled "MULTI-INPUT GAME CONTROL MIXER", (Attorney Docket SCEA06MXR1), filed on May 6, 2006; U.S. Patent Application No. 11/382,032, entitled "SYSTEM FOR TRACKING USER MANIPULATIONS WITHIN AN ENVIRONMENT", (Attorney Docket SCEA06MXR2), filed on May 6, 2006; U.S. Patent Application No. 11/382,033, entitled "SYSTEM, METHOD, AND APPARATUS FOR THREE-DIMENSIONAL INPUT CONTROL", (Attorney Docket SCEA06INRT1), filed on May 6, 2006; U.S. Patent Application No. 11/382,035, entitled "INERTIALLY TRACKABLE HAND-HELD CONTROLLER", (Attorney Docket SCEA06INRT2), filed on May 6, 2006; U.S. Patent Application No. 11/382,036, entitled "METHOD AND SYSTEM FOR APPLYING GEARING EFFECTS TO VISUAL TRACKING", (Attorney Docket SONYP058A), filed on May 6, 2006; U.S. Patent Application No. 11/382,041, entitled "METHOD AND SYSTEM FOR APPLYING GEARING EFFECTS TO INERTIAL TRACKING", (Attorney Docket SONYP058B), filed on May 7, 2006; U.S. Patent Application No. 11/382,038, entitled "METHOD AND SYSTEM FOR APPLYING GEARING EFFECTS TO ACOUSTICAL TRACKING", (Attorney Docket SONYP058C), filed on May 6, 2006; U.S. Patent Application No. 11/382,040, entitled "METHOD AND SYSTEM FOR APPLYING GEARING EFFECTS TO MULTI-CHANNEL MIXED INPUT", (Attorney Docket SONYP058D), filed on May 7, 2006; U.S. Patent Application No. 11/382,034, entitled "SCHEME FOR DETECTING AND TRACKING USER MANIPULATION OF A GAME CONTROLLER BODY", (Attorney Docket 86321 SCEA05082US00), filed on May 6, 2006; U.S. Patent Application No. 11/382,037, entitled "SCHEME FOR TRANSLATING MOVEMENTS OF A HAND-HELD CONTROLLER INTO INPUTS FOR A SYSTEM", (Attorney Docket 86324), filed on May 6, 2006; U.S. Patent Application No. 11/382,043, entitled "DETECTABLE AND TRACKABLE HAND-HELD CONTROLLER", (Attorney Docket 86325), filed on May 7, 2006; U.S. Patent Application No. 11/382,039, entitled "METHOD FOR MAPPING MOVEMENTS OF A HAND-HELD CONTROLLER TO GAME COMMANDS", (Attorney Docket 86326), filed on May 7, 2006; U.S. Design Patent Application No. 29/259,349, entitled "CONTROLLER WITH INFRARED PORT", (Attorney Docket SCEA06007US00), filed on May 6, 2006; U.S. Design Patent Application No. 29/259,350, entitled "CONTROLLER WITH TRACKING SENSORS", (Attorney Docket SCEA06008US00), filed on May 6, 2006; U.S. Patent Application No. 60/798,031, entitled "DYNAMIC TARGET INTERFACE", (Attorney Docket SCEA06009US00), filed on May 6, 2006; and U.S. Design Patent Application No. 29/259,348, entitled "TRACKED CONTROLLER DEVICE", (Attorney Docket SCEA06010US00), filed on May 6, 2006; U.S. Patent Application No. 11/382,250, entitled "OBTAINING INPUT FOR CONTROLLING EXECUTION OF A GAME PROGRAM", (Attorney Docket SCEA06018US00), filed on May 8, 2006; all of which are hereby incorporated herein by reference in their entireties.

This application also claims the benefits of co-pending U.S. Patent Application Number 11/430,594 , to Gary Zalewski and Riley R. Russell, entitled "SYSTEM AND METHOD FOR USING USER'S VISUAL/ADIOU ENVIRONMENT TO SELECT ADVERTISING", (Attorney Docket SCEA05059US00), filed on May 8, 2006, the entire disclosure of which is incorporated herein by reference.

This application also claims the benefits of co-pending U.S. Patent Application Number 11/430,593, to Gary Zalewski and Riley R. Russell, entitled "Using Audio/Visual Environment To Select Ads On Game Platform", (Attorney Docket SCEAUS 3.0-011), filed on May 8, 2006, the entire disclosure of which is incorporated herein by reference.

This application also claims the benefits of co-pending U.S. Patent Application Number 11/382,259, to Gary Zalewski et al., entitled "Method and apparatus for use in determining lack of user activity in relation to a system", (Attorney Docket 86327), filed on May 8, 2006, the entire disclosure of which is incorporated herein by reference.

This application also claims the benefits of co-pending U.S. Patent Application Number 11/382,258, to Gary Zalewski et al., entitled "Method and apparatus for use in determining an activity level of a user in relation to a system", (Attorney Docket 86328), filed on May 8, 2006, the entire disclosure of which is incorporated herein by reference.

This application also claims the benefits of co-pending U.S. Patent Application Number 11/382,251, to Gary Zalewski et al., entitled "Hand-held controller having detectable elements for tracking purposes", (Attorney Docket 86329), filed on May 8, 2006, the entire disclosure of which is incorporated herein by reference.

This application also claims the benefits of co-pending U.S. Patent Application Number 11/382,252, entitled "TRACKING DEVICE FOR USE IN OBTAINING INFORMATION FOR CONTROLLING GAME PROGRAM EXECUTION", (Attorney Docket SCEA06INRT3), filed on May 8, 2006, the entire disclosure of which is incorporated herein by reference.

This application also claims the benefits of co-pending U.S. Patent Application Number 11/382,256, entitled "TRACKING DEVICE WITH SOUND EMITTER FOR USE IN OBTAINING INFORMATION FOR CONTROLLING GAME PROGRAM EXECUTION", (Attorney Docket SCEA06ACRA2), filed on May 8, 2006, the entire disclosure of which is incorporated herein by reference.

This application also claims the benefits of co-pending U.S. Design Patent Application Number 29/246,744, entitled "VIDEO GAME CONTROLLER FRONT FACE", (Attorney Docket SCEACTR-D3), filed on May 8, 2006, the entire disclosure of which is incorporated herein by reference.

This application also claims the benefits of co-pending U.S. Design Patent Application Number 29/246,743, entitled "VIDEO GAME CONTROLLER", (Attorney Docket SCEACTRL-D2), filed on May 8, 2006, the entire disclosure of which is incorporated herein by reference.

This application also claims the benefits of co-pending U.S. Design Patent Application Number 29/246,767, entitled "VIDEO GAME CONTROLLER", (Attorney Docket SONYP059A), filed on May 8, 2006, the entire disclosure of which is incorporated herein by reference.

This application also claims the benefits of co-pending U.S. Design Patent Application Number 29/246,768, entitled "VIDEO GAME CONTROLLER", (Attorney Docket SONYP059B), filed on May 8, 2006, the entire disclosure of which is incorporated herein by reference.

This application is also claims the benefits of co-pending U.S. Design Patent Application Number 29/246,763, entitled "ERGONOMIC GAME CONTROLLER DEVICE WITH LEDS AND OPTICAL PORTS", (Attorney Docket PA3760US), filed on May 8, 2006, the entire disclosure of which is incorporated herein by reference.

This application also claims the benefits of co-pending U.S. Design Patent Application Number 29/246,759, entitled "GAME CONTROLLER DEVICE WITH LEDS AND OPTICAL PORTS", (Attorney Docket PA3761US), filed on May 8, 2006, the entire disclosure of which is incorporated herein by reference.

This application also claims the benefits of co-pending U.S. Design Patent Application Number 29/246,765, entitled "DESIGN FOR OPTICAL GAME CONTROLLER INTERFACE", (Attorney Docket PA3762US), filed on May 8, 2006, the entire disclosure of which is incorporated herein by reference.

This application also claims the benefits of co-pending U.S. Design Patent Application Number 29/246,766, entitled "DUAL GRIP GAME CONTROL DEVICE WITH LEDS AND OPTICAL PORTS", (Attorney Docket PA3763US), filed on May 8, 2006, the entire disclosure of which is incorporated herein by reference.

This application also claims the benefits of co-pending U.S. Design Patent Application Number 29/246,764, entitled "GAME INTERFACE DEVICE WITH LEDS AND OPTICAL PORTS", (Attorney Docket PA3764US), filed on May 8, 2006, the entire disclosure of which is incorporated herein by reference.

This application also claims the benefits of co-pending U.S. Design Patent Application Number 29/246,762, entitled "ERGONOMIC GAME INTERFACE DEVICE WITH LEDS AND OPTICAL PORTS", (Attorney Docket PA3765US), filed on May 8, 2006, the entire disclosure of which is incorporated herein by reference.

### CROSS-REFERENCE TO RELATED APPLICATIONS

This application is related to U.S. Provisional Patent Application No. 60/718,145, entitled "AUDIO, VIDEO, SIMULATION, AND USER INTERFACE PARADIGMS", filed September 15, 2005, which is hereby incorporated by reference.

This application is related to US Patent Application No. 10/207,677, entitled, "MAN-MACHINE INTERFACE USING A DEFORMABLE DEVICE", filed on July 27, 2002; U.S. Patent Application No. 10/650,409, entitled, "AUDIO INPUT SYSTEM", filed on August 27, 2003; US Patent Application No. 10/663,236, entitled "METHOD AND APPARATUS FOR ADJUSTING A VIEW OF A SCENE BEING DISPLAYED ACCORDING TO TRACKED HEAD MOTION", filed on September 15, 2003; US Patent Application No. 10/759,782, entitled "METHOD AND APPARATUS FOR LIGHT INPUT DEVICE", filed on January 16, 2004; U.S. Patent Application 10/820,469, entitled "METHOD AND APPARATUS TO DETECT AND REMOVE AUDIO DISTURBANCES", filed on April 7, 2004; and U.S. Patent Application No. 11/301,673, entitled "METHOD FOR USING RELATIVE HEAD AND HAND POSITIONS TO ENABLE A POINTING INTERFACE VIA CAMERA TRACKING", filed on December 12, 2005; U.S. Patent Application No. 11/165,473, entitled, "DELAY MATCHING IN AUDIO/VIDEO SYSTEM", filed on June 22, 2005, all of which are hereby incorporated by reference.

This application is also related to co-pending U.S. Patent Lapp. No. 11/400,997, filed on April 10, 2006, to Larsen and Chen, entitled "System And Method For Obtaining User Information From Voices", (Attorney Docket SCEA05040US00), the entire disclosure of which is incorporated herein by reference.

### FIELD OF THE INVENTION

The present invention generally relates to obtaining input for controlling execution of a game program.

### BACKGROUND OF THE INVENTION

Computer entertainment systems typically include a hand-held controller, game controller, or other controller. A user or player uses the controller to send commands or other instructions to the entertainment system to control a video game or other simulation being played. For example, the controller may be provided with a manipulator which is operated by the user, such as a joy stick. The manipulated variable of the joy stick is converted from an analog value into a digital value, which is sent to the game machine main frame. The controller may also be provided with buttons that can be operated by the user.

It is with respect to these and other background information factors that the present invention has evolved.

Various respective aspects and features of the invention are defined in the appended claims.

### BRIEF DESCRIPTION OF THE DRAWINGS

Embodiments of the invention will now be described, by way of example only, with reference to the accompanying drawings, in which:
FIG. 1 is a pictorial diagram illustrating a video game system that operates in accordance with an embodiment of the present invention;
FIG. 2 is a perspective view of a controller made in accordance with an embodiment of the present invention;
FIG. 3 is a three-dimensional schematic diagram illustrating an accelerometer that may be used in a controller according to an embodiment of the present invention;
FIG. 4 is a block diagram of a system for mixing various control inputs according to an embodiment of the present invention;
FIG. 5A is a block diagram of a portion of the video game system of FIG. 1.
FIG. 5B is a flow diagram of a method for tracking a controller of a video game system according to an embodiment of the present invention;
FIG. 5C is a flow diagram illustrating a method for utilizing position and/or orientation information during game play on a video game system according to an embodiment of the present invention.
FIG. 6 is a block diagram illustrating a video game system according to an embodiment of the present invention; and
FIG. 7 is a block diagram of a cell processor implementation of the video game system according to an embodiment of the present invention.

### DESCRIPTION OF THE SPECIFIC EMBODIMENTS

Although the following detailed description contains many specific details for the purposes of illustration, anyone of ordinary skill in the art will appreciate that many variations and alterations to the following details are within the scope of the invention. Accordingly, the exemplary embodiments of the invention described below are set forth without any loss of generality to, and without imposing limitations upon, the claimed invention.

Various embodiments of the methods, apparatus, schemes and systems described herein provide for the detection, capture and tracking of the movements, motions and/or manipulations of the entire controller body itself by the user. The detected movements, motions and/or manipulations of the entire controller body by the user may be used as additional commands to control various aspects of the game or other simulation being played.

Detecting and tracking a user's manipulations of a game controller body may be implemented in different ways. For example, an inertial sensor, such as an accelerometer or gyroscope, an image capture unit, such as a digital camera, can be used with the computer entertainment system to detect motions of the hand-held controller body and transfer them into actions in a game. Examples of tracking a controller with an inertial sensor are described, e.g., in US Patent Application 11/382,033, entitled "SYSTEM, METHOD, AND APPARATUS FOR THREE-DIMENSIONAL INPUT CONTROL" (Attorney Docket Number SCEA06INRT1), which is incorporated herein by reference. Examples of tracking a controller using image capture are described, e.g., in US Patent Application 11/382,034, entitled "SCHEME FOR DETECTING AND TRACKING USER MANIPULATION OF A GAME CONTROLLER BODY" (Attorney Docket Number SCEA05082US00), which is incorporated herein by reference. In addition, the controller and/or the user may also be tracked acoustically using a microphone array and appropriate signal processing. Examples of such acoustic tracking are described in US Patent Application 11/381,721, which is incorporated herein by reference.

Acoustic sensing, inertial sensing and image capture can be used individually or in any combination to detect many different types of motions of the controller, such as for example up and down movements, twisting movements, side to side movements, jerking movements, wand-like motions, plunging motions, etc. Such motions may correspond to various commands such that the motions are transferred into actions in a game. Detecting and tracking the user's manipulations of a game controller body can be used to implement many different types of games, simulations, etc., that allow the user to, for example, engage in a sword or lightsaber fight, use a wand to trace the shape of items, engage in many different types of sporting events, engage in on-screen fights or other encounters, etc. A game program may configured to track the motion of the controller and recognize certain pre-recorded gestures from the tracked motion. Recognition of one or more of these gestures may trigger a change in the game state.

In embodiments of the present invention controller path information obtained from these different sources may be mixed prior to analysis for gesture recognition. The tracking data from different sources (e.g., acoustic, inertial and image capture) may be mixed in a way that improves the likelihood of recognition of a gesture.

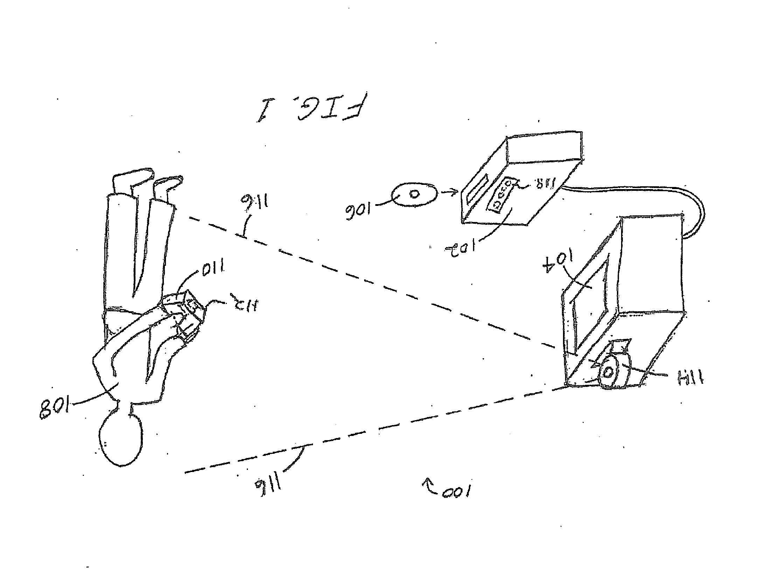

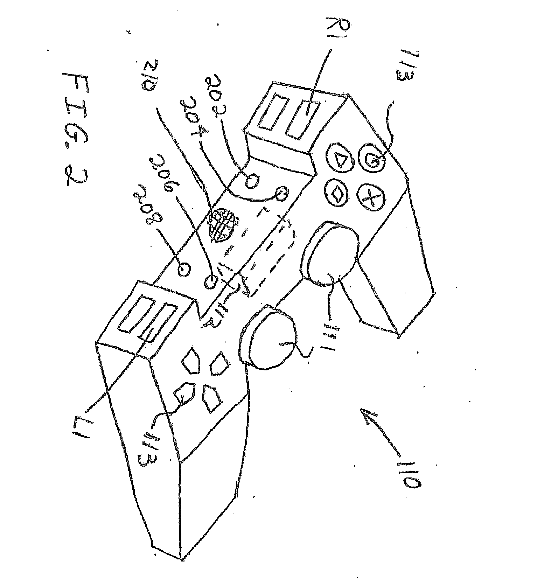

Referring to FIG. 1, there is illustrated a system 100 that operates in accordance with an embodiment of the present invention. As illustrated, a computer entertainment console **102** may be coupled to a television or other video display **104** to display the images of the video game or other simulation thereon. The game or other simulation may be stored on a DVD, CD, flash memory, USB memory, or other memory media 106 that is inserted into the 30 console **102.** A user or player **108** manipulates a game controller **110** to control the video game or other simulation. As seen in FIG. 2, the game controller **110** includes an inertial sensor **112** that produces signals in response to the position, motion, orientation or change in orientation of the game controller **110.** In addition to the inertial sensor, the game controller **110** may include conventional control input devices, e.g., joysticks **111,** buttons **113,** R1, L1, and the like.

During operation, the user **108** physically moves the controller **110.** For example, the controller **110** may be moved in any direction by the user 108, such as up, down, to one side, to the other side, twisted, rolled, shaken, jerked, plunged, etc. These movements of the controller **110** itself may be detected and captured by the camera **112** by way of tracking through analysis of signals from the inertial sensor **112** in a manner described below.

Referring again to FIG. 1, the system **100** may optionally include a camera or other video image capturing device **114,** which may be positioned so that the controller **110** is within the camera's field of view **116.** Analysis of images from the image capturing device **114** may be used in conjunction with analysis of data from the inertial sensor **112.** As shown in FIG. 2, the controller **110** may optionally be equipped with light sources such as light emitting diodes (LEDs) **202, 204, 206, 208** to facilitate tracking by video analysis. These may be mounted to a body of the controller **110.** As used herein, the term "body" meant to describe the part of the game controller **110** that one would hold by hand (or wear if it were a wearable game controller).

Analysis of such video images for the purpose of tracking the controller **110** are described, e.g., in US Patent Application number 11/382,034, entitled "SCHEME FOR DETECTING AND TRACKING USER MANIPULATION OF A GAME CONTROLLER BODY" (Attorney Docket Number SCEA05082US00), to inventors Gary M. Zalewski, which is incorporated herein by reference. The console **102** may include an acoustic transducer, such as a microphone array **118.** The controller **110** may also include an acoustic signal generator **210** (e.g., a speaker) to provide a source of sound to facilitate acoustic tracking of the controller **110** with the microphone array **118** and appropriate acoustic signal processing, e.g., as described in US Patent Application 11/381,724, which is incorporated herein by reference.

In general, signals from the inertial sensor **112** are used to generate position and orientation data for the controller **110.** Such data may be used to calculate many physical aspects of the movement of the controller **110,** such as for example its acceleration and velocity along any axis, its tilt, pitch, yaw, roll, as well as any telemetry points of the controller **110.** As used herein, telemetry generally refers to remote measurement and reporting of information of interest to a system or to the system's designer or operator.

The ability to detect and track the movements of the controller **110** makes it possible to determine whether any predefined movements of the controller **110** are performed. That is, certain movement patterns or gestures of the controller **110** may be predefined and used as input commands for the game or other simulation. For example, a plunging downward gesture of the controller **110** may be defined as one command, a twisting gesture of the controller **110** may be defined as another command, a shaking gesture of the controller **110** may be defined as another command, and so on. In this way the manner in which the user **108** physically moves the controller **110** is used as another input for controlling the game, which provides a more stimulating and entertaining experience for the user.

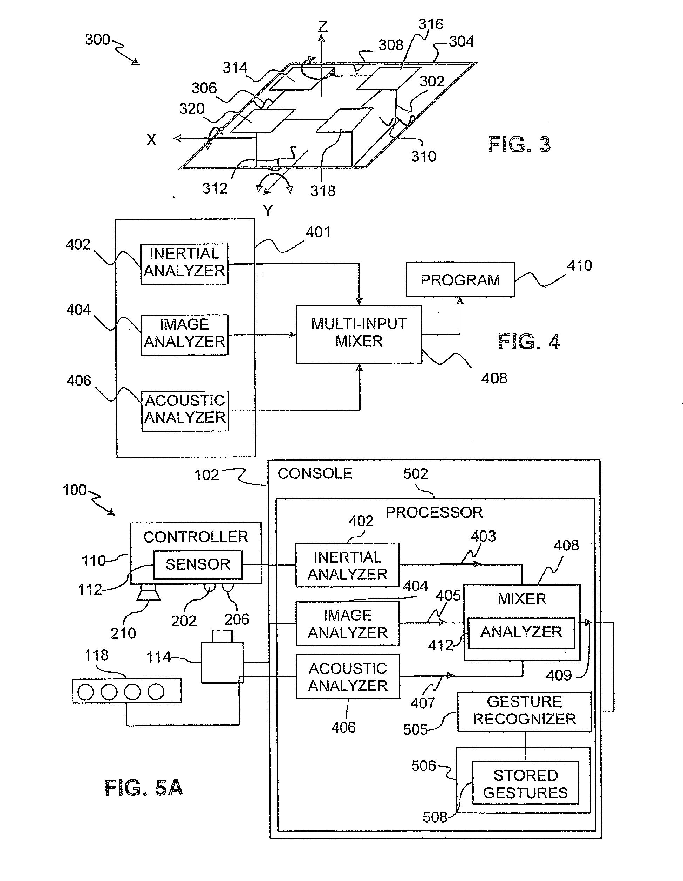

By way of example and without limitation, the inertial sensor **112** may be an accelerometer. FIG. 3 depicts an example of an accelerometer **300** in the form of a simple mass **302** elastically coupled at four points to a frame **304,** e.g., by springs **306, 308, 310, 312.** Pitch and roll axes (indicated by X and Y, respectively) lie in a plane that intersects the frame. A yaw axis Z is oriented perpendicular to the plane containing the pitch axis X and the roll axis Y. The frame **304** may be mounted to the controller **110** in any suitable fashion. As the frame **304** (and the game controller **110)** accelerates and/or rotates the mass **302** may displace relative to the frame **304** and the springs **306, 308, 310, 312** may elongate or compress in a way that depends on the amount and direction of translational and/or rotational acceleration and/or the angle of pitch and/or roll and/or yaw. The displacement and of the mass **302** and/or compression or elongation of the springs **306,308,310,312** may be sensed, e.g., with appropriate sensors **314, 316, 318, 320** and converted to signals that depend in known or determinable way on the amount acceleration of pitch and/or roll.

There are a number of different ways to track the position of the mass and/or the forces exerted on it, including resistive strain gauge material, photonic sensors, magnetic sensors, hall-effect devices, piezoelectric devices, capacitive sensors, and the like. Embodiments of the invention may include any number and type or combination of types of sensors. By way of example, and without limitation, the sensors **314, 316, 318, 320** may be gap closing electrodes placed above the mass **302.** A capacitance between the mass and each electrode changes as the position of the mass changes relative to each electrode. Each electrode may be connected to a circuit that produce a signal related to the capacitance (and therefore to the proximity) of the mass **302** relative to the electrode. In addition, the springs **306, 308, 310, 312** may include resistive strain gauge sensors that produce signals that are related to the compression or elongation of the springs.

In some embodiments, the frame **304** may be gimbal mounted to the controller **110** so that the accelerometer **300** maintains a fixed orientation with respect to the pitch and/or roll and/or yaw axes. In such a manner, the controller axes X, Y, Z may be directly mapped to corresponding axes in real space without having to take into account a tilting of the controller axes with respect to the real space coordinate axes.

As discussed above, data from inertial, image capture and acoustic sources may be analyzed to generate a path that tracks the position and/or orientation of the controller **110.** As shown in the block diagram of FIG. 4 a system **400** according to an embodiment of the invention may include an inertial analyzer **402,** an image analyzer **404** and an acoustic analyzer **406.** Each of these analyzers receives signals from a sensed environment **401.** The analyzers **402, 406, 408** may be implemented in hardware, in software (or firmware) or some combination of two or more of these. Each of the analyzers produces tracking information related the position and/or orientation of an object of interest. By way of example, the object of interest may be the controller **110** referred to above. The image analyzer **404** may operate in connection with and to form fields below and with respect to methods described in US Patent Application 11/382,034 (Attorney Docket Number SCEA05082US00). The inertial analyzer **402** may operate in connection with and to form fields below and with respect to methods described in US Patent Application 11/382,033, entitled "SYSTEM, METHOD, AND APPARATUS FOR THREE-DIMENSIONAL INPUT CONTROL" (Attorney Docket Number SCEA06INRT1). The acoustic analyzer **406** may operate in connection with and to form fields below and with respect to methods described in US Patent Application 11/381,724.

The analyzers **402, 404** and **406** may be regarded as being associated with different channels of inputs of position and/or orientation information. The Mixer **408** may accept multiple input channels and such channels may contain sample data characterizing the sensed environment **401,** typically from the perspective of the channel. The position and/or orientation information generated by the inertial analyzer **402,** image analyzer **404** and acoustic analyzer **406** can be coupled into the input of a mixer **408.** The Mixer **408** and analyzers **402, 404, 406** may be queried by a game software program **410** and may be configured to interrupt game software in response to events. Events may include gesture recognition events, gearing changes, configuration changes, setting noise levels, setting sampling rate, changing mapping chains, etc, examples of which are discussed below. The mixer **408** may operate in connection with and to form fields below and with respect to methods described herein.

As discussed above, signals from different input channels, e.g., inertial sensors, video images and/or acoustic sensors may be analyzed by the inertial analyzer **402,** image analyzer **404** and acoustic analyzer **406,** respectively, to determine the motion and/or orientation of the controller **110** during play of a video game according to an inventive method. Such a method may be implemented as a series of processor executable program code instructions stored in a processor readable medium and executed on a digital processor. For example, as depicted in FIG. 5A, the video game system **100** may include on the console **102** having the inertial analyzer **402,** image analyzer **404** and acoustic analyzer **406** implemented either in hardware or software. By way of example, the analyzers **402, 404, 406** may be implemented as software instructions running on a suitable processor unit **502.** By way of example, the processor unit **502** may be a digital processor, e.g., a microprocessor of a type commonly used in video game consoles. A portion of the instructions may be stored in a memory **506.** Alternatively, the inertial analyzer **402,** image analyzer **404** and acoustic analyzer **406** may be implemented in hardware, e.g., as an application specific integrated circuit (ASIC). Such analyzer hardware may be located on the controller **110** or on the console **102** or may be remotely located elsewhere. In hardware implementations, the analyzers **402, 404, 406** may be programmable in response to external signals e.g., from the processor **502** or some other remotely located source, e.g., connected by USB cable, wireless connection, or over a network.

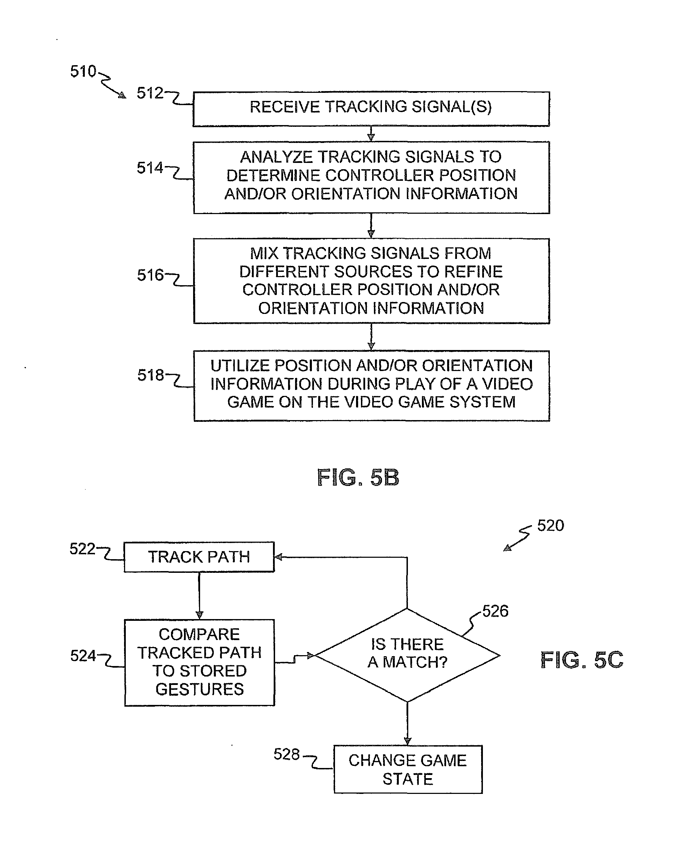

The inertial analyzer **402** may include or implement instructions that analyze the signals generated by the inertial sensor **112** and utilize information regarding position and/or orientation of the controller **110.** Similarly, the image analyzer **404** may implement instructions that analyze images captured by the image capture unit **114.** In addition, the acoustic analyzer may implement instructions that analyze images captured by the microphone array 118. As shown in the flow diagram **510** of FIG. 5B these signals and/or images may be received by the analyzers **402, 404, 406** as indicated at block **512.** The signals and/or images may be analyzed by the analyzers **402, 404, 406** to determine inertial tracking information **403,** image tracking information **405** and acoustic tracking information **407** regarding the position and/or orientation of the controller **110** as indicated at block 514. The tracking information **403, 405, 407** may be related to one or more degrees of freedom. It is preferred that six degrees of freedom are tracked to characterize the manipulation of the controller **110** or other tracked object. Such degrees of freedom may relate to the controller tilt, yaw, roll and position, velocity or acceleration along the x, y and z-axis.

As indicated at block **516**, the mixer **408** mixes the inertial information **403,** image information **405** and acoustic information **407** to generate refined position and/or orientation information **409.** By way of example, the mixer **408** may apply different weights the inertial, image and acoustic tracking information **403, 405, 407** based on game or environmental conditions and the take a weighted average. In addition, the mixer **408** may include its own mixer analyzer **412** that analyzes the combined position/orientation information and generates its own resulting "mixer" information that involves combinations of the information generated by the other analyzers.

In an embodiment of the present invention the mixer **408** may assign a distribution value to the tracking information **403, 405, 407** from the analyzers **402, 404, 406.** As noted above, certain sets of input control data may be averaged. In the present embodiment, however, the input control data is assigned a value prior to its being averaged whereby the input control data from some analyzers is of more analytical importance than from others.

The mixer **408** may take on a number of functionalities in the context of the present system including observation, correction, stabilization, derivation, combination, routing, mixing, reporting, buffering, interrupting other processes and analysis. Such may be performed with respect to the tracking information **403, 405, 407** received from one or more of the analyzers **402, 404, 406.** While each of the analyzers **402, 404, 406** may receive and/or derive certain tracking information, the mixer **408** may be implemented to optimize the use of the received tracking information **403, 405, 407** and generate refined tracking information **409.**

The analyzers **402, 404, 406** and mixer **408** are preferably configured to provide tracking information similar output formats. Tracking information parameters from any analyzer element **402, 404, 406** can be mapped to a single parameter in an analyzer. Alternatively, the mixer **408** may form tracking information for any of the analyzers **402, 404, 406** by processing one or more tracking information parameters from one or more of analyzers **402, 404,406.** The mixer may combine two or more elements of tracking information of the same parameter type taken from the analyzers **402, 404, 406** and/or perform functions across multiple parameters of tracking information generated by the analyzers to create a synthetic set of output having the benefit of being generated from multiple channels of input.

The refined tracking information **409** may be utilized during play of a video game with the system 100 as indicated at block 518. In certain embodiments, the position and/or orientation information may be used in relation to gestures made by the user 108 during game play. In some embodiments the mixer **408** may operate in conjunction with the gesture recognizer 505 to associate at least one action in a game environment with one or more user actions from the user (e.g., manipulation of the controller in space).

As indicated in the flow diagram **520** of FIG. 5C, a path of the controller **110** may be tracked using the position and/or orientation information as indicated at block **522.** By way of example, and without limitation, the path may include a set of points representing a position of the center of mass of the controller with respect to some system of coordinates. Each position point may be represented by one or more coordinates, e.g., X, Y and Z coordinates in a Cartesian coordinate system. A time may be associated with each point on the path so that both the shape of the path and the progress of the controller along the path may be monitored. In addition, each point in the set may have associated with it data representing an orientation of the controller, e.g., one or more angles of rotation of the controller about its center of mass. Furthermore, each point on the path may have associated with it values of velocity and acceleration of the center of mass of the controller and rates of angular rotation and angular acceleration of the controller about its center of mass.

As indicated at block **524,** the tracked path may be compared to one or more stored paths corresponding to known and/or pre-recorded gestures **508** that are relevant to the context of the video game being played. Recognizer **505** may be configured to recognize a user or process audio authenticated gestures, etc. For example, a user may be identified by the recognizer **505** through a gesture and that a gesture may be specific to a user. Such a specific gestures may recorded and included among the pre-recorded gestures **508** stored in memory **506.** The recordation process may optionally store audio generated during recordation of a gesture. The sensed environment is sampled into a multi-channel analyzer and processed. The processor may reference gesture models to determine and authenticate and/or identify a user or objects based on voice or acoustic patterns and to a high degree of accuracy and performance.

As indicated in FIG. 5A, data **508** representing the gestures may be stored in the memory **506.** Examples of gestures include, but are not limited to throwing an object such as a ball, swinging an object such as a bat or golf club, pumping hand pump, opening or closing a door or window, turning steering wheel or other vehicle control, martial arts moves such as punches, sanding movements, wax on wax off, paint the house, shakes, rattles, rolls, football pitches, turning knob movements, 3D MOUSE movements, scrolling movements, movements with known profiles, any recordable movement, movements along any vector back and forth i.e. pump the tire but at some arbitrary orientation in space, movements along a path, movements having precise stop and start times, any time based user manipulation that can be recorded, tracked and repeated within the noise floor, splines, and the like. Each of these gestures may be pre-recorded from path data and stored as a time-based model. Comparison of the path and stored gestures may start with an assumption of a steady state if the path deviates from a steady state the path can be compared to the stored gestures by a process of elimination. If at block **526** there is no match, the analyzer may continue tracking the path of the controller **110** at block **522.** If there is a sufficient match between the path (or a portion thereof) and a stored gesture the state of the game may be changed as indicated at **528.** Changes of state of the game may include, but are not limited to interrupts, sending control signals, changing variables, etc.

Here is one example of this can occur. Upon determining that the controller 110 has left a steady state the path an analyzer **402, 404, 406,** or **412** tracks movement of the controller **110.** As long as the path of the controller **110** complies with a path defined in the stored gesture models **508**, those gestures are possible "hits". If the path of the controller **110** deviates (within the noise tolerance setting) from any gesture model **508**, that gesture model is removed from the hit list. Each gesture reference model includes a time-base in which the gesture is recorded. The analyzer **402, 404, 406,** or **412** compares the controller path data to the stored gestures **508** at the appropriate time index. Occurrence of a steady state condition resets the clock. When deviating from steady state (i.e. when movements are tracked outside of the noise threshold) the hit list is populated with all potential gesture models. The clock is started and movements of the controller are compared against the hit list. Again, the comparison is a walk through time. If any gesture in the hit list reaches the end of the gesture then it is a hit.

In certain embodiments, the mixer **408** and/or individual analyzers **402, 404, 406, 412** may inform a game program when certain events occur. Examples of such events include the following:

### INTERRUPT ZERO-ACCELERATION POINT REACHED (X AND/OR Y AND/OR Z

AXIS) In certain game situations the analyzer may notify or interrupt routine within the game program when acceleration of the controller changes at the inflection points. For example, the user **108** may use the controller **110** to control a game avatar representing a quarterback in a football simulation game. The analyzer may track the controller (representing the football) via a path generated from signals from the inertial sensor **112.** A particular change in acceleration of the controller **110** may signal release of the football. At this point, the analyzer may trigger another routine within the program (e.g., a physics simulation package) to simulate the trajectory of the football based on the position, and/or velocity and/or orientation of the controller at the point of release.

### INTERRUPT NEW GESTURE RECOGNIZED

In addition, the analyzer may be configured by one or more inputs. Examples of such inputs include, but are not limited to:
SET NOISE LEVEL (X,Y or Z AXIS) The noise level may be a reference tolerance used when analyzing jitter of the user's hands in the game.
SET SAMPLING RATE. As used herein, the sampling rate may refer to how often the analyzer samples the signals from the inertial sensor. The sampling rate may be set to oversample or average the signal.
SET GEARING. As used herein gearing generally refers to the ratio of controller movements to movements occurring within the game. Examples of such "gearing" in the context of control of a video game may be found in US Patent Application number 11/382,040, filed May 7, 2006, (Attorney Docket No.:SONYP058D), which is incorporated herein by reference.
SET MAPPING CHAIN. As used herein, a mapping chain refers to a map of gesture models. The gesture model maps can be made for a specific input Channel (e.g., for path data generated from inertial sensor signals only) or for a hybrid Channel formed in a mixer unit. Three input Channels may be served by two or more different Analyzers that are similar to the inertial analyzer **402.** Specifically, these may include: the inertial analyzer **402** as described herein, a video analyzer as described e.g., in US Patent Application 11/382,034, to inventors Gary M. Zalewski, entitled SCHEME FOR DETECTING AND TRACKING USER MANIPULATION OF A GAME CONTROLLER BODY (Attorney Docket SCEA05082US00), which is incorporated herein by reference, and an Acoustic Analyzer, e.g., as described in US Patent Application 11/381721, which is incorporated herein by reference. The Analyzers can be configured with a mapping chain. Mapping chains can be swapped out by the game during gameplay as can settings to the Analyzer and to the Mixer.

Referring to again to FIG. 5B, block **512,** those of skill in the art will recognize that there are numerous ways to generate signals from the inertial sensor **112.** A few examples, among others have been described herein. Referring to block **514,** there are numerous ways to analyze the sensor signals generated in block **512** to obtain tracking information relating to the position and/or orientation of the controller **110.** By way of example and without limitation the tracking information may include, but is not limited to information regarding the following parameters individually or in any combination:
CONTROLLER ORIENTATION. Orientation of the controller **110** may be expressed in terms of pitch, roll or yaw angle with respect to some reference orientation, e.g., in radians). Rates of change of controller orientation (e.g., angular velocities or angular accelerations) may also be included in the position and/or orientation information. For example, where the inertial sensor **112** includes a gyroscopic sensor controller orientation information may be obtained directly in the form of one or more output values that are proportional to angles of pitch, roll or yaw.
CONTROLLER POSITION (e.g., Cartesian coordinates X,Y,Z of the controller **110** in some frame of reference)
CONTROLLER X-AXIS VELOCITY
CONTROLLER Y-AXIS VELOCITY
CONTROLLER Z-AXIS VELOCITY
CONTROLLER X-AXIS ACCELERATION
CONTROLLER Y-AXIS ACCELERATION
CONTROLLER Z-AXIS ACCELERATION

It is noted that with respect to position, velocity and acceleration the position and/or orientation information may be expressed in terms of coordinate systems other than Cartesian. For example, cylindrical or spherical coordinates may be used for position, velocity and acceleration. Acceleration information with respect to the X, Y and Z axes may be obtained directly from an accelerometer type sensor, e.g., as described herein. The X, Y and Z accelerations may be integrated with respect to time from some initial instant to determine changes in X, Y and Z velocities. These velocities may be computed by adding the velocity changes to known values of the X-, Y-, and Z-velocities at the initial instant in time. The X, Y and Z velocities may be integrated with respect to time to determine X-, Y-, and Z-displacements of the controller. The X-, Y-, and Z-positions may be determined by adding the displacements to known X-, Y-, and Z-, positions at the initial instant.

STEADY STATE Y/N - This particular information indicates whether the controller is in a steady state, which may be defined as any position, which may be subject to change too. In a preferred embodiment the steady state position may be one wherein the controller is held in a more or less level orientation at a height roughly even with a user's waist.

TIME SINCE LAST STEADY STATE generally refers to data related to how long a period of time has passed since a steady state (as referenced above) was last detected. That determination of time may, as previously noted, be calculated in real-time, processor cycles, or sampling periods. The Time Since Last Steady State data time may be important with regard to resetting tracking of a controller with regard to an initial point to ensure accuracy of character or object mapping in a game environment. This data may also be important with regard to determining available actions/gestures that might be subsequently executed in a game environment (both exclusively and inclusively).

LAST GESTURE RECOGNIZED generally refers to the last gesture recognized either by the gesture recognizer 505 (which may be implemented in hardware or software. The identification of a last gesture recognized may be important with respect to the fact that a previous gesture may be related to the possible gestures that may be subsequently recognized or some other action that takes place in the game environment.

### TIME LAST GESTURE RECOGNIZED

The above outputs can be sampled at any time by a game program or software.

In an embodiment of the present invention the mixer **408** may assign a distribution value to the tracking information **403, 405, 407** from the analyzers **402, 404, 406.** As noted above, certain sets of input control data may be averaged. In the present embodiment, however, the input control data is assigned a value prior to its being averaged whereby the input control data from some analyzers is of more analytical importance than from others.

For example, the mixer **408** may require tracking information related to acceleration and steady state. The mixer **408** would then receive the tracking information **403, 405, 407** as described above. The tracking information may include parameters relating to acceleration and steady state, e.g., as described above. Prior to averaging the data representing this information, the mixer **408** may assign distribution values to tracking information data set **403, 405, 407.** For example, the x- and y- acceleration parameters from the inertial analyzer **402** may be weighted at a value of 90%. The x- and y- acceleration data from the image analyzer **406**, however, may be weighted at only 10%. The acoustic analyzer tracking information **407** as it pertains to acceleration parameters may be weighted at zero percent, that is, the data has no value.

Similarly, the Z-axis tracking information parameters from the inertial analyzer **402** may be weighted at 10% whereas the image analyzer Z-axis tracking information may be weighted at 90%. The acoustic analyzer tracking information **407** may, again, be weighted at 0% value but steady state tracking information from the acoustic analyzer **406** may be weighted at 100% with the remaining analyzer tracking information be weighted at 0%.

After the appropriate distribution weight has been assigned, the input control data may be averaged in conjunction with that weight to arrive at a weighted average input control data set that is subsequently analyzed by the gesture recognizer **505** and associated with a particular action in the game environment. The values associated may be pre-defined by the mixer **408** or by a particular game title. The values may also be the result of the mixer **408** identifying a particular quality of data coming from the various analyzers and thus making a dynamic adjustment as is further discussed below. The adjustment may also be the result of building a historical knowledge base of when particular data is of particular value in a particular environment and/or in response to the particularities of a given game title.

The mixer **408** may be configured to operate dynamically during game play. For example, as the mixer **408** receives various input control data, it may recognize that certain data is consistently outside an acceptable range or quality of data or reflects corrupt data that may be indicative of a processing error at the related input device.

Additionally, certain conditions in a real-world environment might change. For example, natural light in the user's at-home game environment might be increasing as the morning turns to afternoon causing problems with image data capture. Further, a neighborhood or household might become noisier as the day goes on causing problems with audio data capture. Likewise, if a user has been playing for several hours, their reflexes may become less sharp thus causing problems with interpretation of inertial data.

In these instances, or in any other instance wherein the quality of a particular form of input control data is in question, the mixer **408** may dynamically reassign distribution weight to a particular set of data coming from a particular device such that more or less importance is given to particular input control data as described above. Similarly, the game environment may change over the course of the game wherein the needs of a particular game change thus requiring a reassignment of value or need for particular input control data.

Similarly, the mixer **408** may recognize that certain data being passed on to the gesture recognizer **505** is being processed incorrectly, slowly, or not at all based on processing errors or feedback data that may be generated by the gesture recognizer 505. In response to this feedback or in recognition of these processing difficulties (*e.g*., while the image analysis data is within an acceptable range, errors result when an association is made by the gesture recognizer **505),** the mixer **408** may adjust what input control data it seeks from what analyzer and when, if at all. The mixer **408** may further require certain analysis and processing of input control data by the proper analyzer before it is passed to the mixer **408,** which may re-process the data (*e.g*., average the data) such that a further layer of assurance is made that the data passed to the gesture recognizer **505** will be processed effectively and appropriately.

In some embodiments, the mixer **408** may recognize that certain data is corrupt, ineffective, or outside a particular variable and may call upon particular input control data or variable related to that data such that it may replace incorrect data or properly analyze and calculate certain data with respect to the necessary variables.

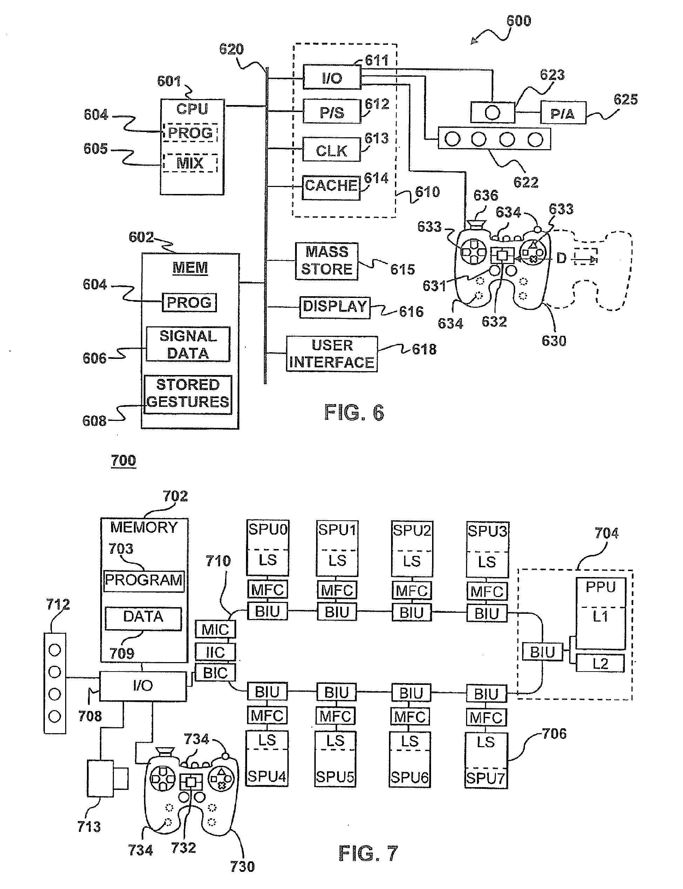

According to embodiments of the present invention, a video game system and method of the type described above may be implemented as depicted in FIG. 6. A video game system **600** may include a processor **601** and a memory **602** (e.g., RAM, DRAM, ROM, and the like). In addition, the video game system **600** may have multiple processors **601** if parallel processing is to be implemented. The memory **602** includes data and game program code **604,** which may include portions that are configured as described above. Specifically, the memory **602** may include inertial signal data **606** which may include stored controller path information as described above. The memory **602** may also contain stored gesture data **608,** e.g., data representing one or more gestures relevant to the game program **604**. Coded instructions executed on the processor **602** may implement a multi-input mixer 605, which may be configured and function as described above.

The system **600** may also include well-known support functions **610,** such as input/output (I/O) elements **611**, power supplies (P/S) **612,** a clock (CLK) **613** and cache **614.** The apparatus **600** may optionally include a mass storage device **615** such as a disk drive, CD-ROM drive, tape drive, or the like to store programs and/or data. The controller may also optionally include a display unit **616** and user interface unit **618** to facilitate interaction between the controller **600** and a user. The display unit **616** may be in the form of a cathode ray tube (CRT) or flat panel screen that displays text, numerals, graphical symbols or images. The user interface **618** may include a keyboard, mouse, joystick, light pen or other device. In addition, the user interface **618** may include a microphone, video camera or other signal transducing device to provide for direct capture of a signal to be analyzed. The processor **601,** memory **602** and other components of the system **600** may exchange signals (e.g., code instructions and data) with each other via a system bus **620** as shown in FIG. 6.

A microphone array **622** may be coupled to the system **600** through the I/O functions **611.** The microphone array may include between about 2 and about 8 microphones, preferably about 4 microphones with neighboring microphones separated by a distance of less than about 4 centimeters, preferably between about 1 centimeter and about 2 centimeters. Preferably, the microphones in the array **622** are omni-directional microphones. An optional image capture unit **623** (e.g., a digital camera) may be coupled to the apparatus **600** through the I/O functions **611**. One or more pointing actuators **625** that are mechanically coupled to the camera may exchange signals with the processor **601** via the I/O functions **611.**

As used herein, the term I/O generally refers to any program, operation or device that transfers data to or from the system **600** and to or from a peripheral device. Every data transfer may be regarded as an output from one device and an input into another. Peripheral devices include input-only devices, such as keyboards and mouses, output-only devices, such as printers as well as devices such as a writable CD-ROM that can act as both an input and an output device. The term "peripheral device" includes external devices, such as a mouse, keyboard, printer, monitor, microphone, game controller, camera, external Zip drive or scanner as well as internal devices, such as a CD-ROM drive, CD-R drive or internal modem or other peripheral such as a flash memory reader/writer, hard drive.

In certain embodiments of the invention, the apparatus **600** may be a video game unit, which may include a controller **630** coupled to the processor via the I/O functions **611** either through wires (e.g., a USB cable) or wirelessly. The controller **630** may have analog joystick controls **631** and conventional buttons **633** that provide control signals commonly used during playing of video games. Such video games may be implemented as processor readable data and/or instructions from the program **604** which may be stored in the memory **602** or other processor readable medium such as one associated with the mass storage device **615.** In some embodiments, the mixer **605** may receive inputs from the analog joystick controls **631** and the buttons **633.**

The joystick controls **631** may generally be configured so that moving a control stick left or right signals movement along the X axis, and moving it forward (up) or back (down) signals movement along the Y axis. In joysticks that are configured for three-dimensional movement, twisting the stick left (counter-clockwise) or right (clockwise) may signal movement along the Z axis. These three axis - X Y and Z - are often referred to as roll, pitch, and yaw, respectively, particularly in relation to an aircraft.

The game controller **630** may include a communications interface operable to conduct digital communications with at least one of the processor **602,** a game controller **630** or both. The communications interface may include a universal asynchronous receiver transmitter ("UART"). The UART may be operable to receive a control signal for controlling an operation of a tracking device, or for transmitting a signal from the tracking device for communication with another device. Alternatively, the communications interface includes a universal serial bus ("USB") controller. The USB controller may be operable to receive a control signal for controlling an operation of the tracking device, or for transmitting a signal from the tracking device for communication with another device.

In addition, the controller **630** may include one or more inertial sensors **632,** which may provide position and/or orientation information to the processor **601** via an inertial signal. Orientation information may include angular information such as a tilt, roll or yaw of the controller **630.** By way of example, the inertial sensors **632** may include any number and/or combination of accelerometers, gyroscopes or tilt sensors. In a preferred embodiment, the inertial sensors **632** include tilt sensors adapted to sense orientation of the game controller **630** with respect to tilt and roll axes, a first accelerometer adapted to sense acceleration along a yaw axis and a second accelerometer adapted to sense angular acceleration with respect to the yaw axis. An accelerometer may be implemented, e.g., as a HEMS device including a mass mounted by one or more springs with sensors for sensing displacement of the mass relative to one or more directions. Signals from the sensors that are dependent on the displacement of the mass may be used to determine an acceleration of the game controller **630.** Such techniques may be implemented by instructions from the game program **604** which may be stored in the memory **602** and executed by the processor **601.**

By way of example an accelerometer suitable as the inertial sensor **632** may be a simple mass elastically coupled at three or four points to a frame, e.g., by springs. Pitch and roll axes lie in a plane that intersects the frame, which is mounted to the game controller **630.** As the frame (and the game controller **630)** rotates about pitch and roll axes the mass will displace under the influence of gravity and the springs will elongate or compress in a way that depends on the angle of pitch and/or roll. The displacement and of the mass can be sensed and converted to a signal that is dependent on the amount of pitch and/or roll. Angular acceleration about the yaw axis or linear acceleration along the yaw axis may also produce characteristic patterns of compression and/or elongation of the springs or motion of the mass that can be sensed and converted to signals that are dependent on the amount of angular or linear acceleration. Such an accelerometer device can measure tilt, roll angular acceleration about the yaw axis and linear acceleration along the yaw axis by tracking movement of the mass or compression and expansion forces of the springs. There are a number of different ways to track the position of the mass and/or or the forces exerted on it, including resistive strain gauge material, photonic sensors, magnetic sensors, hall-effect devices, piezoelectric devices, capacitive sensors, and the like.

In addition, the game controller **630** may include one or more light sources **634,** such as light emitting diodes (LEDs). The light sources **634** may be used to distinguish one controller from the other. For example one or more LEDs can accomplish this by flashing or holding an LED pattern code. By way of example, 5 LEDs can be provided on the game controller **630** in a linear or two-dimensional pattern. Although a linear array of LEDs is preferred, the LEDs may alternatively, be arranged in a rectangular pattern or an arcuate pattern to facilitate determination of an image plane of the LED array when analyzing an image of the LED pattern obtained by the image capture unit **623.** Furthermore, the LED pattern codes may also be used to determine the positioning of the game controller **630** during game play. For instance, the LEDs can assist in identifying tilt, yaw and roll of the controllers. This detection pattern can assist in providing a better user/feel in games, such as aircraft flying games, etc. The image capture unit **623** may capture images containing the game controller **630** and light sources **634.** Analysis of such images can determine the location and/or orientation of the game controller. Such analysis may be implemented by program code instructions **604** stored in the memory **602** and executed by the processor **601.** To facilitate capture of images of the light sources **634** by the image capture unit **623,** the light sources **634** may be placed on two or more different sides of the game controller **630,** e.g., on the front and on the back (as shown in phantom). Such placement allows the image capture unit **623** to obtain images of the light sources **634** for different orientations of the game controller 630 depending on how the game controller 630 is held by a user.

In addition the light sources **634** may provide telemetry signals to the processor **601,** e.g., in pulse code, amplitude modulation or frequency modulation format. Such telemetry signals may indicate which joystick buttons are being pressed and/or how hard such buttons are being pressed. Telemetry signals may be encoded into the optical signal, e.g., by pulse coding, pulse width modulation, frequency modulation or light intensity (amplitude) modulation. The processor **601** may decode the telemetry signal from the optical signal and execute a game command in response to the decoded telemetry signal. Telemetry signals may be decoded from analysis of images of the game controller **630** obtained by the image capture unit **623.** Alternatively, the apparatus **600** may include a separate optical sensor dedicated to receiving telemetry signals from the lights sources **634**. The use of LEDs in conjunction with determining an intensity amount in interfacing with a computer program is described, e.g., in US Patent Application Number 11/429,414, to Richard L. Marks et al., entitled "Computer Image and Audio Processing of Intensity and Input Devices for Interfacing With A Computer Program" (Attorney Docket No. SONYP052), filed May 4, 2006, which is incorporated herein by reference in its entirety. In addition, analysis of images containing the light sources **634** may be used for both telemetry and determining the position and/or orientation of the game controller **630.** Such techniques may be implemented by instructions of the program **604** which may be stored in the memory **602** and executed by the processor 601.

The processor **601** may use the inertial signals from the inertial sensor **632** in conjunction with optical signals from light sources **634** detected by the image capture unit **623** and/or sound source location and characterization information from acoustic signals detected by the microphone array **622** to deduce information on the location and/or orientation of the controller **630** and/or its user. For example, "acoustic radar" sound source location and characterization may be used in conjunction with the microphone array **622** to track a moving voice while motion of the game controller is independently tracked (through the inertial sensor **632** and or light sources **634).** In acoustic radar select a pre-calibrated listening zone is selected at runtime and sounds originating from sources outside the pre-calibrated listening zone are filtered out. The pre-calibrated listening zones may include a listening zone that corresponds to a volume of focus or field of view of the image capture unit **623.** Examples of acoustic radar are described in detail in US Patent Application number 11/381,724, to Xiadong Mao entitled "METHODS AND APPARATUS FOR TARGETED SOUND DETECTION AND CHARACTERIZATION", filed May 4, 2006, which is incorporated herein by reference. Any number of different combinations of different modes of providing control signals to the processor **601** may be used in conjunction with embodiments of the present invention. Such techniques may be implemented by program code instructions **604** which may be stored in the memory **602** and executed by the processor **601** and may optionally include one or more instructions that direct the one or more processors to select a pre-calibrated listening zone at runtime and filter out sounds originating from sources outside the pre-calibrated listening zone. The pre-calibrated listening zones may include a listening zone that corresponds to a volume of focus or field of view of the image capture unit **623.** The program **604** may optionally include one or more instructions that direct the one or more processors to produce a discrete time domain input signal xₘ(t) from microphones Mo ... M_{M}, of the microphone array **622**, determine a listening sector, and use the listening sector in a semi-blind source separation to select the finite impulse response filter coefficients to separate out different sound sources from input signal xₘ(t). The program **604** may also include instructions to apply one or more fractional delays to selected input signals xₘ(t) other than an input signal x₀(t) from a reference microphone Mo. Each fractional delay may be selected to optimize a signal to noise ratio of a discrete time domain output signal y(t) from the microphone array. The fractional delays may be selected to such that a signal from the reference microphone M₀ is first in time relative to signals from the other microphone(s) af the array. The program **604** may also include instructions to introduce a fractional time delay Δ into an output signal y(t) of the microphone array so that: y(t+A) = x(t+Δ)*b₀ + x(t-1+Δ)*b₁ + x(t-2+Δ)*b₂ +...+ x(t-N+A)b_{N}, where Δ is between zero and ±1. Examples of such techniques are described in detail in US Patent Application Number 11/381,729, to Xiadong Mao, entitled "ULTRA SMALL MICROPHONE ARRAY" filed May 4, 2006, the entire disclosures of which are incorporated by reference.

The program 604 may include one or more instructions which, when executed, cause the system 600 to select a pre-calibrated listening sector that contains a source of sound. Such instructions may cause the apparatus to determine whether a source of sound lies within an initial sector or on a particular side of the initial sector. If the source of sound does not lie within the default sector, the instructions may, when executed, select a different sector on the particular side of the default sector. The different sector may be characterized by an attenuation of the input signals that is closest to an optimum value. These instructions may, when executed, calculate an attenuation of input signals from the microphone array **622** and the attenuation to an optimum value. The instructions may, when executed, cause the apparatus **600** to determine a value of an attenuation of the input signals for one or more sectors and select a sector for which the attenuation is closest to an optimum value. Examples of such a technique are described, e.g., in US Patent Application 11/381,725, to Xiadong Mao, entitled "METHODS AND APPARATUS FOR TARGETED SOUND DETECTION" filed May 4, 2006, the disclosures of which are incorporated herein by reference.

Signals from the inertial sensor **632** may provide part of a tracking information input and signals generated from the image capture unit **623** from tracking the one or more light sources **634** may provide another part of the tracking information input. By way of example, and without limitation, such "mixed mode" signals may be used in a football type video game in which a Quarterback pitches the ball to the right after a head fake head movement to the left. Specifically, a game player holding the controller **630** may turn his head to the left and make a sound while making a pitch movement swinging the controller out to the right like it was the football. The microphone array **622** in conjunction with "acoustic radar" program code can track the user's voice. The image capture unit **623** can track the motion of the user's head or track other commands that do not require sound or use of the controller. The sensor **632** may track the motion of the game controller (representing the football). The image capture unit **623** may also track the light sources **634** on the controller **630.** The user may release of the "ball" upon reaching a certain amount and/or direction of acceleration of the game controller **630** or upon a key command triggered by pressing a button on the controller **630.**

In certain embodiments of the present invention, an inertial signal, e.g., from an accelerometer or gyroscope may be used to determine a location of the controller **630.** Specifically, an acceleration signal from an accelerometer may be integrated once with respect to time to determine a change in velocity and the velocity may be integrated with respect to time to determine a change in position. If values of the initial position and velocity at some time are known then the absolute position may be determined using these values and the changes in velocity and position. Although position determination using an inertial sensor may be made more quickly than using the image capture unit **623** and light sources **634** the inertial sensor **632** may be subject to a type of error known as "drift" in which errors that accumulate over time can lead to a discrepancy **D** between the position of the joystick **631** calculated from the inertial signal (shown in phantom) and the actual position of the game controller **630.** Embodiments of the present invention allow a number of ways to deal with such errors.

For example, the drift may be cancelled out manually by re-setting the initial position of the controller 630 to be equal to the current calculated position. A user may use one or more of the buttons on the controller 630 to trigger a command to re-set the initial position. Alternatively, image-based drift may be implemented by re-setting the current position to a position determined from an image obtained from the image capture unit **623** as a reference. Such image-based drift compensation may be implemented manually, e.g., when the user triggers one or more of the buttons on the game controller **630.** Alternatively, image-based drift compensation may be implemented automatically, e.g., at regular intervals of time or in response to game play. Such techniques may be implemented by program code instructions **604** which may be stored in the memory **602** and executed by the processor **601.**

In certain embodiments it may be desirable to compensate for spurious data in the inertial sensor signal. For example the signal from the inertial sensor **632** may be oversampled and a sliding average may be computed from the oversampled signal to remove spurious data from the inertial sensor signal. In some situations it may be desirable to oversample the signal and reject a high and/or low value from some subset of data points and compute the sliding average from the remaining data points. Furthermore, other data sampling and manipulation techniques may be used to adjust the signal from the inertial sensor to remove or reduce the significance of spurious data. The choice of technique may depend on the nature of the signal, computations to be performed with the signal, the nature of game play or some combination of two or more of these. Such techniques may be implemented by instructions of the program **604** which may be stored in the memory **602** and executed by the processor **601.**

The processor **601** may perform analysis of inertial signal data **606** as described above in response to the data **606** and program code instructions of a program **604** stored and retrieved by the memory **602** and executed by the processor module **601.** Code portions of the program **604** may conform to any one of a number of different programming languages such as Assembly, C++, JAVA or a number of other languages. The processor module 601 forms a general-purpose computer that becomes a specific purpose computer when executing programs such as the program code **604.** Although the program code **604** is described herein as being implemented in software and executed upon a general purpose computer, those skilled in the art will realize that the method of task management could alternatively be implemented using hardware such as an application specific integrated circuit (ASIC) or other hardware circuitry. As such, it should be understood that embodiments of the invention can be implemented, in whole or in part, in software, hardware or some combination of both.

In one embodiment, among others, the program code **604** may include a set of processor readable instructions that implement a method having features in common with the method **510** of FIG 5B and the method **520** of FIG. 5C or some combination of two or more of these. The program code **604** may generally include one or more instructions that direct the one or more processors to analyze signals from the inertial sensor **632** to generate position and/or orientation information and utilize the information during play of a video game.

The program code **604** may optionally include processor executable instructions including one or more instructions which, when executed cause the image capture unit 623 to monitor a field of view in front of the image capture unit **623,** identify one or more of the light sources **634** within the field of view, detect a change in light emitted from the light source(s) 634; and in response to detecting the change, triggering an input command to the processor **601.** The use of LEDs in conjunction with an image capture device to trigger actions in a game controller is described e.g., in US Patent Application number 10/759,782 to Richard L. Marks, filed January 16, 2004 and entitled: METHOD AND APPARATUS FOR LIGHT INPUT DEVICE, which is incorporated herein by reference in its entirety.

The program code **604** may optionally include processor executable instructions including one or more instructions which, when executed, use signals from the inertial sensor and signals generated from the image capture unit from tracking the one or more light sources as inputs to a game system, e.g., as described above. The program code **604** may optionally include processor executable instructions including one or more instructions which, when executed compensate for drift in the inertial sensor **632.**

In addition, the program code **604** may optionally include processor executable instructions including one or more instructions which, when executed adjust the gearing and mapping of controller manipulations to game a environment. Such a feature allows a user to change the "gearing" of manipulations of the game controller **630** to game state. For example, a 45 degree rotation of the game controller **630** may be geared to a 45 degree rotation of a game object. However this 1:1 gearing ratio may be modified so that an X degree rotation (or tilt or yaw or "manipulation") of the controller translates to a Y rotation (or tilt or yaw or "manipulation") of the game object. Gearing may be 1: 1 ratio, 1:2 ratio, I :X ratio or X:Y ratio, where X and Y can take on arbitrary values. Additionally, mapping of input channel to game control may also be modified over time or instantly. Modifications may comprise changing gesture trajectory models, modifying the location, scale, threshold of gestures, etc. Such mapping may be programmed, random, tiered, staggered, etc., to provide a user with a dynamic range of manipulatives. Modification of the mapping, gearing or ratios can be adjusted by the game program **604** according to game play, game state, through a user modifier button (key pad, etc.) located on the game controller **630,** or broadly in response to the input channel. The input channel may include, but may not be limited to elements of user audio, audio generated by controller, tracking audio generated by the controller, controller button state, video camera output, controller telemetry data, including accelerometer data, tilt, yaw, roll, position, acceleration and any other data from sensors capable of tracking a user or the user manipulation of an object.

In certain embodiments the game program **604** may change the mapping or gearing over time from one scheme or ratio to another scheme, respectively, in a predetermined time-dependent manner. Gearing and mapping changes can be applied to a game environment in various ways. In one example, a video game character may be controlled under one gearing scheme when the character is healthy and as the character's health deteriorates the system may gear the controller commands so the user is forced to exacerbate the movements of the controller to gesture commands to the character. A video game character who becomes disoriented may force a change of mapping of the input channel as users, for example, may be required to adjust input to regain control of the character under a new mapping. Mapping schemes that modify the translation of the input channel to game commands may also change during gameplay. This translation may occur in various ways in response to game state or in response to modifier commands issued under one or more elements of the input channel. Gearing and mapping may also be configured to influence the configuration and/or processing of one or more elements of the input channel.

In addition, a sound emitter **636,** e.g., a speaker, a buzzer, a horn or a pipe, may be mounted to the joystick controller **630.** In certain embodiments the sound emitter may be detachably mounted to a "body" of the joystick controller **630.** In "acoustic radar" embodiments wherein the program code 604 locates and characterizes sounds detected with the microphone array **622,** the sound emitter **636** may provide an audio signal that can be detected by the microphone array **622** and used by the program code **604** to track the position of the game controller **630.** The sound emitter **636** may also be used to provide an additional "input channel" from the game controller **630** to the processor **601.** Audio signals from the sound emitter **636** may be periodically pulsed to provide a beacon for the acoustic radar to track location. The audio signals (pulsed or otherwise) may be audible or ultrasonic. The acoustic radar may track the user manipulation of the game controller **630** and where such manipulation tracking may include information about the position and orientation (e.g., pitch, roll or yaw angle) of the game controller **630.** The pulses may be triggered at an appropriate duty cycle as one skilled in the art is capable of applying. Pulses may be initiated based on a control signal arbitrated from the system. The system **600** (through the program code **604)** may coordinate the dispatch of control signals amongst two or more joystick controllers **630** coupled to the processor **601** to assure that multiple controllers can be tracked.

In certain embodiments, the mixer **605** may be configured to obtain input for controlling execution of the game program **604** using inputs received from conventional controls on the game controller **630,** e.g., analog joystick controls 631 and buttons **633**. Specifically receiving the mixer **605** may receive controller input information from the controller **630**. The controller input information may include at least one of a) information for identifying a current position of a user-movable control stick of the game controller in relation to a rest position of the control stick, or b) information identifying whether a switch included in the game controller is active. The mixer 605 may further receive supplementary input information from an environment in which the controller **630** is being used. By way of example and without limitation, the supplementary input information may include one or more of i) information obtained from an image capture device in the environment (e.g., image capture unit **623);** and/or ii) information from an inertial sensor associated with at least one of the game controller or a use (e.g., inertial sensor **632);** and/or iii) acoustic information obtained from an acoustic transducer in the environment (e.g., from the microphone array **622,** possibly in conjunction with an acoustic signal generated by the sound emitter **636).**

The controller input information may also include information identifying whether a pressure-sensitive button is active. The mixer **605** may obtain a combined input for controlling the execution of the game program **604** by processing the controller input information and the supplementary input information to yield the combined input.

The combined input may include individual merged inputs for controlling respective individual functions during execution of the game program **604.** At least some of the individual merged inputs may be obtained by merging the controller input information relative to a particular individual function and the supplementary input information relative to the particular individual function. The combined input may include merged input for controlling a function during execution of the game program **604,** and at least some of the merged input may be obtained by merging the controller input information relative to the function and the supplementary input information relative to the function. In such cases the merging may be performed by averaging a value representative of the controller input information with a value representative of the supplementary input information. By way of example, the value of the controller input information may be averaged in a one-to-one ratio with the value of the supplementary input information. Alternatively, the controller input information and the supplementary input information may each be each assigned different weights and averaging may be performed as a weighted average of the values of controller input information and supplementary input information in accordance with the assigned weights.

In some embodiments, a value of a first one of the controller input information or the supplementary input information may be utilized as modifying input to the game program for modifying control over a still active function activated in accordance with at least one of a second one of the controller input information or the supplementary input information. The supplementary input information may include inertial sensor information obtained by operation of the inertial sensor **632** and/or orientation information representative of an orientation of a user-movable object. Alternatively, the supplementary input information includes information indicative of at least one of a position or an orientation of a user-movable object. As used here, the user-movable object may refer to the controller **630** or an article mounted to a body of the controller **630** and the supplementary input information includes information indicative of an orientation of the user-movable object. By way of example such orientation information may include information indicative of at least one of pitch, yaw or roll.

In some embodiments, the combined input may be obtained by merging a value of controller input information representative of a position of a control stick (e.g., one of the analog joysticks **631**, with a value of the supplementary input information representative of the orientation of the user-movable object. As state above, the user-movable object may include an object mounted to the game controller **630** and/or the game controller **630,** and the combined input may reflect an enhanced pitch up input when the control stick is moved backward while the pitch is increased to a positive (nose-up) value. Similarly, the combined input may reflect an enhanced pitch down input when the control stick is moved forward while the pitch is decreased to a negative (nose-down) value.

The combined input may be obtained by assigning the value of the controller input information representative of a position of the control stick as coarse control information and assigning the value of the supplementary input information representative of the orientation of the user-movable object as fine control information. Alternatively, the combined input may be obtained by assigning the value of the controller input information identifying whether a switch of the game controller is active as coarse control information and assigning the value of the supplementary input information representative of the orientation of the user-movable object as fine control information. In addition, the combined input may be obtained by assigning the value of the supplementary input information representative of the orientation of the user-movable object as coarse control information and assigning the value of the controller input information representative of a position of the control stick as fine control information. Furthermore, the combined input may also be obtained by assigning the value of the controller input information identifying whether a switch of the game controller is active as fine control information and assigning the value of the supplementary input information representative of the orientation of the user-movable object as coarse control information. In any or all of these cases, the combined input may be representative of the value of the coarse control information as adjusted a relatively small amount in accordance with the fine control information.

In some embodiments, the combined input may be obtained by additively combining a value represented by the controller input information with a value represented by the supplementary input information such that the combined input presents a signal having a higher or lower value to the game program **604** than either of the values of the controller input information or the supplementary input information taken alone. The combined input may alternatively present a signal having a smoothed value to the game program **604,** the smoothed value signal being subject to change more slowly with time than either of the values of the controller input information or the supplementary input information taken alone. The combined input may also present a high definition signal having increased signal content to the game program. The high definition signal may be subject to change more rapidly with time than either of the values of the controller input information or the supplementary input information taken alone.

Although embodiments of the present invention are described in terms of examples related to a video game controller **630** games, embodiments of the invention, including the system **600** may be used on any user manipulated body, molded object, knob, structure, etc, with inertial sensing capability and inertial sensor signal transmission capability, wireless or otherwise.

By way of example, embodiments of the present invention may be implemented on parallel processing systems. Such parallel processing systems typically include two or more processor elements that are configured to execute parts of a program in parallel using separate processors. By way of example, and without limitation, FIG. 7 illustrates a type of cell processor **700** according to an embodiment of the present invention. The cell processor **700** may be used as the processor **601** of FIG. 6 or the processor **502** of FIG. 5A. In the example depicted in FIG. 7, the cell processor **700** includes a main memory **702,** power processor element (PPE) **704**, and a number of synergistic processor elements (SPEs) **706.** In the example depicted in FIG. 7, the cell processor **700** includes a single PPE **704** and eight SPE **706**. In such a configuration, seven of the SPE **706** may be used for parallel processing and one may be reserved as a back-up in case one of the other seven fails. A cell processor may alternatively include multiple groups of PPEs (PPE groups) and multiple groups of SPEs (SPE groups). In such a case, hardware resources can be shared between units within a group. However, the SPEs and PPEs must appear to software as independent elements. As such, embodiments of the present invention are not limited to use with the configuration shown in FIG. 7.

The main memory **702** typically includes both general-purpose and nonvolatile storage, as well as special-purpose hardware registers or arrays used for functions such as system configuration, data-transfer synchronization, memory-mapped I/O, and I/O subsystems. In embodiments of the present invention, a video game program **703** may be resident in main memory **702**. The video program **703** may include inertial, image and acoustic analyzers and a mixer configured as described with respect to FIGs. 4, 5A, 5B or 5C above or some combination of these. The program **703** may run on the PPE. The program **703** may be divided up into multiple signal processing tasks that can be executed on the SPEs and/or PPE.

By way of example, the PPE **704** may be a 64-bit PowerPC Processor Unit (PPU) with associated caches L1 and L2. The PPE **704** is a general-purpose processing unit, which can access system management resources (such as the memory-protection tables, for example). Hardware resources may be mapped explicitly to a real address space as seen by the PPE. Therefore, the PPE can address any of these resources directly by using an appropriate effective address value. A primary function of the PPE **704** is the management and allocation of tasks for the SPEs 706 in the cell processor **700.**

Although only a single PPE is shown in FIG. 7, some cell processor implementations, such as cell broadband engine architecture (CBEA), the cell processor 700 may have multiple PPEs organized into PPE groups, of which there may be more than one. These PPE groups may share access to the main memory **702.** Furthermore the cell processor **700** may include two or more groups SPEs. The SPE groups may also share access to the main memory **702**. Such configurations are within the scope of the present invention.

Each SPE **706** is includes a synergistic processor unit (SPU) and its own local storage area LS. The local storage LS may include one or more separate areas of memory storage, each one associated with a specific SPU. Each SPU may be configured to only execute instructions (including data load and data store operations) from within its own associated local storage domain. In such a configuration, data transfers between the local storage LS and elsewhere in the system **700** may be performed by issuing direct memory access (DMA) commands from the memory flow controller (MFC) to transfer data to or from the local storage domain (ofthe individual SPE). The SPUs are less complex computational units than the PPE **704** in that they do not perform any system management functions. The SPU generally have a single instruction, multiple data (SIMD) capability and typically process data and initiate any required data transfers (subject to access properties set up by the PPE) in order to perform their allocated tasks. The purpose of the SPU is to enable applications that require a higher computational unit density and can effectively use the provided instruction set. A significant number of SPEs in a system managed by the PPE **704** allow for cost-effective processing over a wide range of applications.

Each SPE **706** may include a dedicated memory flow controller (MFC) that includes an associated memory management unit that can hold and process memory-protection and access-permission information. The MFC provides the primary method for data transfer, protection, and synchronization between main storage of the cell processor and the local storage of an SPE. An MFC command describes the transfer to be performed. Commands for transferring data are sometimes referred to as MFC direct memory access (DMA) commands (or MFC DMA commands).

Each MFC may support multiple DMA transfers at the same time and can maintain and process multiple MFC commands. Each MFC DMA data transfer command request may involve both a local storage address (LSA) and an effective address (EA). The local storage address may directly address only the local storage area of its associated SPE. The effective address may have a more general application, e.g., it may be able to reference main storage, including all the SPE local storage areas, if they are aliased into the real address space.

To facilitate communication between the SPEs **706** and/or between the SPEs **706** and the PPE **704,** the SPEs **706** and PPE **704** may include signal notification registers that are tied to signaling events. The PPE **704** and SPEs **706** may be coupled by a star topology in which the PPE **704** acts as a router to transmit messages to the SPEs **706.** Alternatively, each SPE **706** and the PPE **704** may have a one-way signal notification register referred to as a mailbox. The mailbox can be used by an SPE **706** to host operating system (OS) synchronization.

The cell processor **700** may include an input/output (I/O) function **708** through which the cell processor **700** may interface with peripheral devices, such as a microphone array **712** and optional image capture unit **713** and a game controller **730.** The game controller unit may include an inertial sensor **732,** and light sources **734.** In addition an Element Interconnect Bus **710** may connect the various components listed above. Each SPE and the PPE can access the bus **710** through a bus interface units **BIU**. The cell processor **700** may also includes two controllers typically found in a processor: a Memory Interface Controller MIC that controls the flow of data between the bus **710** and the main memory **702**, and a Bus Interface Controller **BIC**, which controls the flow of data between the I/O **708** and the bus **710.** Although the requirements for the **MIC, BIC, BIUs** and bus **710** may vary widely for different implementations, those of skill in the art will be familiar their functions and circuits for implementing them.

The cell processor **700** may also include an internal interrupt controller **IIC**. The **IIC** component manages the priority of the interrupts presented to the PPE. The **IIC** allows interrupts from the other components the cell processor **700** to be handled without using a main system interrupt controller. The **IIC** may be regarded as a second level controller. The main system interrupt controller may handle interrupts originating external to the cell processor.

In embodiments of the present invention, certain computations, such as the fractional delays described above, may be performed in parallel using the PPE **704** and/or one or more of the SPE **706.** Each fractional delay calculation may be run as one or more separate tasks that different SPE **706** may take as they become available.

While the above is a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents. Any feature described herein, whether preferred or not, may be combined with any other feature described herein, whether preferred or not. In the claims that follow, the indefinite article "A", or "An" refers to a quantity of one or more of the item following the article, except where expressly stated otherwise.

Features of embodiments of the invention are defined in the following numbered clauses:
1. A method of obtaining input for controlling execution of a game program, comprising:
   receiving controller input information from a user-manipulable game controller, the controller input information including at least one of a) information for identifying a current position of a user-movable control stick of the game controller in relation to a rest position of the control stick, or b) information identifying whether a switch included in the game controller is active;
   receiving supplementary input information from an environment in which the controller is being used; and
   obtaining a combined input for controlling the execution of the game program by processing the controller input information and the supplementary input information to yield the combined input.
2. The method according to clause 1, wherein the combined input includes individual merged inputs for controlling respective individual functions during execution of the game program, and at least some of the individual merged inputs are obtained by merging the controller input information relative to a particular individual function and the supplementary input information relative to the particular individual function.
3. The method according to clause 1, wherein the combined input includes merged input for controlling a function during execution of the game program, and at least some of the merged input is obtained by merging the controller input information relative to the function and the supplementary input information relative to the function.
4. The method according to clauses 2 or 3, wherein the merging is performed by averaging a value representative of the controller input information with a value representative of the supplementary input information.
5. The method according to clause 4, wherein the value of the controller input information is averaged in a one-to-one ratio with the value of the supplementary input information.
6. The method according to clause 4, wherein the controller input information and the supplementary input information are each assigned different weights and the step of averaging is performed as a weighted average of the values of controller input information and supplementary input information in accordance with the assigned weights.
7. The method according to clause 1, further comprising utilizing a value of a first one of the controller input information or the supplementary input information as modifying input to the game program for modifying control over a still active function activated in accordance with at least one of a second one of the controller input information or the supplementary input information.
8. The method according to clauses 2, 3 or 7, wherein the supplementary input information includes at least one of inertial sensor information obtained by operation of an inertial sensor or orientation information representative of an orientation of a user-movable object.
9. The method according to clause 8, wherein the inertial sensor is mounted to the game controller and the inertial sensor includes at least one of an accelerometer or a gyroscope.
10. The method according to clause 2 or 8, wherein the supplementary input information includes information indicative of at least one of a position or an orientation of a user-movable object.
11. The method according to clause 10, wherein the user-movable object includes at least one of the game controller or an article mounted to a body of the game controller and the supplementary input information includes information indicative of an orientation of the user-movable object.
12. The method according to clause 10, wherein the supplementary input information includes information indicative of at least one of pitch, yaw or roll.
13. The method according to clause 12, wherein the supplementary input information includes information indicative of pitch, yaw and roll.
14. The method according to any one of clauses 10 to 13, wherein the combined input is obtained by merging a value of controller input information representative of a position of the control stick with a value of the supplementary input information representative of the orientation of the user-movable object.
15. The method according to clause 14, wherein the user-movable object includes at least one of an object mounted to the game controller or the game controller, and the combined input reflects an enhanced pitch up input when the control stick is moved backward while the pitch is increased to a positive (nose-up) value.
16. The method according to clause 15, wherein the user-movable object includes at least one of an object mounted to the game controller or the game controller, and the combined input reflects an enhanced pitch down input when the control stick is moved forward while the pitch is decreased to a negative (nose-down) value.
17. The method according to clause 14, wherein the combined input is obtained by assigning the value of the controller input information representative of a position of the control stick as coarse control information and assigning the value of the supplementary input information representative of the orientation of the user-movable object as fine control information, wherein the combined input is representative of the value of the coarse control information as adjusted a relatively small amount in accordance with the fine control information.
18. The method according to clause 14 or clause 17, wherein the combined input is obtained by assigning the value of the controller input information identifying whether a switch of the game controller is active as coarse control information and assigning the value of the supplementary input information representative of the orientation of the user-movable object as fine control information, wherein the combined input is representative of the value of the coarse control information as adjusted a relatively small amount in accordance with the fine control information.
19. The method according to clause 14 or clause 18, wherein the combined input is obtained by assigning the value of the supplementary input information representative of the orientation of the user-movable object as coarse control information and assigning the value of the controller input information representative of a position of the control stick as fine control information, wherein the combined input is representative of the value of the coarse control information as adjusted a relatively small amount in accordance with the fine control information.
20. The method according to clause 14, 17 or 19, wherein the combined input is obtained by assigning the value of the controller input information identifying whether a switch of the game controller is active as fine control information and assigning the value of the supplementary input information representative of the orientation of the user-movable object as coarse control information, wherein the combined input is representative of the value of the coarse control information as adjusted a relatively small amount in accordance with the fine control information.
21. The method according to clauses 1, 2 or 3, wherein the combined input is obtained by additively combining a value represented by the controller input information with a value represented by the supplementary input information such that the combined input presents a signal having a higher value to the game program than either of the values of the controller input information or the supplementary input information taken alone.
22. The method according to clauses 1, 2 or 3, wherein the combined input is obtained by subtractively combining a value represented by the controller input information with a value represented by the supplementary input information such that the combined input presents a signal having a lower value to the game program than either of the values of the controller input information or the supplementary input information taken alone.
23. The method according to clauses 1, 2 or 3, wherein the combined input presents a signal having a smoothed value to the game program, the smoothed value signal being subject to change more slowly with time than either of the values of the controller input information or the supplementary input information taken alone.
24. The method according to clauses 1, 2 or 3, wherein the combined input presents a high definition signal having increased signal content to the game program, the high definition signal being subject to change more rapidly with time than either of the values of the controller input information or the supplementary input information taken alone.
25. The method according to any one of clauses 1, 2 or 3, wherein the supplementary input information includes acoustic information obtained from an acoustic transducer in the environment.
26. The method according to any one of clauses 1, 2 or 3, wherein the controller input information includes information identifying whether a pressure-sensitive button is active.
27. The method according to any one of clauses 1, 2 or 3, wherein the supplementary input information includes at least one of: i) information obtained from an image capture device in the environment, ii) information from an inertial sensor associated with at least one of the game controller or the user, or iii) information from an acoustic transducer in the environment.
28. The method according to any one of clauses 1, 2 or 3, wherein the supplementary input information includes information obtained from an image capture device in the environment, information from an inertial sensor associated with at least one of the game controller or the user, and information from an acoustic transducer in the environment.
29. Computer software having program code which, when executed on a computer, causes the computer to carry out a method according to any one of clauses 1 to 28.
30. A computer games machine for interacting with a user-manipulable game controller having a user-movable control stick and a switch; the machine comprising:
   means for receiving controller input information from the game controller, the controller input information including at least one of a) information for identifying a current position of the control stick in relation to a rest position of the control stick, or b) information identifying whether the switch is active;
   means for receiving supplementary input information from an environment in which the controller is being used; and
   means for obtaining a combined input for controlling the execution of the game program by processing the controller input information and the supplementary input information to yield the combined input.
31. A machine according to clause 30, the machine comprising a user-manipulable game controller having a user-movable control stick and a switch.

## Claims

1. A method of obtaining input for controlling execution of a program, comprising:
receiving controller input information from a user-manipulable controller, the controller input information including at least one of a) information for identifying a current position of a user-movable control stick of the controller in relation to a rest position of the control stick, or b) information identifying whether a switch included in the controller is active;
receiving supplementary input information from an environment in which the controller is being used; and
obtaining a combined input for controlling the execution of the program by processing the controller input information and the supplementary input information to yield the combined input.

2. The method as claimed in claim 1, wherein the supplementary input information includes at least one of: i) information obtained from an image capture device in the environment, ii) information from an inertial sensor associated with at least one of the controller or the user, or iii) information from an acoustic transducer in the environment.

3. The method as claimed in claim 1 or claim 2, wherein the supplementary input information includes information obtained from an image capture device in the environment, information from an inertial sensor associated with at least one of the controller or the user, and information from an acoustic transducer in the environment.

4. The method as claimed in any one of the preceding claims, further comprising utilizing a value of a first one of the controller input information or the supplementary input information as modifying input to the program for modifying control over a still active function activated in accordance with at least one of a second one of the controller input information or the supplementary input information.

5. The method as claimed in any one of the preceding claims, wherein the supplementary input information includes information representative of a position or orientation of a user-movable object.

6. The method as claimed in claim 5, wherein the user-movable object includes at least one of the controller or an article mounted to a body of the controller and the supplementary input information includes information indicative of an orientation of the user-movable object.

7. The method as claimed in claim 5 or claim 6, wherein the supplementary input information includes information indicative of at least one of pitch, yaw or roll.

8. The method as claimed in claim 7, wherein the supplementary input information includes information indicative of pitch, yaw and roll.

9. The method as claimed in any one of claims 5 to 8, wherein the combined input is obtained by merging a value of controller input information representative of a position of the control stick with a value of the supplementary input information representative of the orientation of the user-movable object.

10. The method as claimed in claim 9, wherein the user-movable object includes at least one of an object mounted to the controller or the controller, and the combined input reflects an enhanced pitch up input when the control stick is moved backward while the pitch is increased to a positive (nose-up) value.

11. The method as claimed in claim 10, wherein the user-movable object includes at least one of an object mounted to the controller or the controller, and the combined input reflects an enhanced pitch down input when the control stick is moved forward while the pitch is decreased to a negative (nose-down) value.

12. The method as claimed in any one of the preceding claims, wherein the inertial sensor is mounted to the controller and the inertial sensor includes at least one of an accelerometer or a gyroscope.

13. The method as claimed in any one of the preceding claims, wherein the combined input is obtained by additively combining a value represented by the controller input information with a value represented by the supplementary input information such that the combined input presents a signal having a higher value to the program than either of the values of the controller input information or the supplementary input information taken alone.

14. The method as claimed in any one of claims 1 to 12, wherein the combined input is obtained by subtractively combining a value represented by the controller input information with a value represented by the supplementary input information such that the combined input presents a signal having a lower value to the program than either of the values of the controller input information or the supplementary input information taken alone.

15. The method as claimed in any one of the preceding claims, wherein the combined input presents a signal having a smoothed value to the program, the smoothed value signal being subject to change more slowly with time than either of the values of the controller input information or the supplementary input information taken alone.

16. The method as claimed in any one of the preceding claims, wherein the combined input presents a high definition signal having increased signal content to the program, the high definition signal being subject to change more rapidly with time than either of the values of the controller input information or the supplementary input information taken alone.

17. The method as claimed in any one of the preceding claims, wherein the supplementary input information includes acoustic information obtained from an acoustic transducer in the environment.

18. The method as claimed in any one of the preceding claims, wherein the controller input information includes information identifying whether a pressure-sensitive button is active.

19. Computer software having program code which, when executed on a computer, causes the computer to carry out a method according to any one of claims 1 to 18.

20. A computer machine for interacting with a user-manipulable controller having a user-movable control stick and a switch; the machine comprising:
means for receiving controller input information from the controller, the controller input information including at least one of a) information for identifying a current position of the control stick in relation to a rest position of the control stick, or b) information identifying whether the switch is active;
means for receiving supplementary input information from an environment in which the controller is being used; and
means for obtaining a combined input for controlling the execution of the program by processing the controller input information and the supplementary input information to yield the combined input.

21. A machine according to claim 20, the machine comprising a user-manipulable controller having a user-movable control stick and a switch
